# EUROPÄISCHE PATENTSCHRIFT

(11) **EP 0 601 452 B1**
(45) Veröffentlichungstag und Bekanntmachung des Hinweises auf die Patenterteilung: **09.09.1998**
(21) Anmeldenummer: 93119340.3
(22) Anmeldetag: 01.12.1993
(51) Int. Cl.: A01N 31/02

(54) **Flächendesinfektionsmittel, insbesondere für Kunststoffoberflächen**
Surface disinfectant, in particular for plastic surfaces
Désinfactant de surfaces, en particulier pour les surfaces plastiques

(30) Priorität: 05.12.1992 DE 4241079
(43) Veröffentlichungstag der Anmeldung: 15.06.1994
(73) Patentinhaber: Bode Chemie GmbH & Co., D-22525 Hamburg (DE)
(72) Erfinder: Brigitte Meyer, 22303 Hamburg (DE); Dr. Bernhard Walz, 42349 Wuppertal (DE)
(74) Vertreter: Siewers, Gescha, Dr.

(56) Entgegenhaltungen:
- EP-A- 0 111 135
- EP-A- 0 384 126
- FR-A- 2 328 481
- GB-A- 2 108 389
- GB-A- 2 231 496

## Beschreibung

Die Erfindung betrifft Flächendesinfektionsmittel, und zwar insbesondere für Kunststoffoberflächen auf Basis kurzkettiger Alkohole.

Die Verwendung von alkoholischen Desinfektionsmitteln mit einem Zusatz von anionischen Tensiden als Netzmittel zur Sprüh- oder Wischdesinfektion ist allgemein bekannt. Es hat sich aber herausgestellt, daß solche Desinfektionsmittel, bei denen der Alkoholgehalt in der Regel über 60 Vol.% liegt, zwar über relativ kurze Einwirkzeiten im Minutenbereich verfügen, wobei ein weiterer Vorteil ist, daß Desinfektionsmittel dieser Art frei sind von geruchsintensiven und/oder umstrittenen Stoffen wie Phenolen und Aldehyden. Nachteilig ist aber, daß Desinfektionsmittel mit einem hohen Alkoholgehalt bestimmte Vorsichtsmaßnahmen bei der Handhabung bedingen und außerdem bei länger dauernder Einwirkung oder häufigem Gebrauch zu Schädigungen der behandelten Oberflächen führen können, und zwar insbesondere dann, wenn es sich um Kunststoffe wie Polyester, Polycarbonate oder Polyacrylate handelt. Diese Kunststoffe werden nach längerer Einwirkung von kurzkettigen Alkoholen spröde bis zur Rissigkeit und zeigen außerdem Verfärbungen oder werden opak. So zeigt beispielsweise PMMA, also Polymethylmethacrylat, bei länger dauerndem Einwirken von Ethanol bei 20°C eine deutliche Blaufärbung.

Zur Vermeidung dieser bekannten Nachteile ist beispielsweise in der DE-OS 39 05 063 bereits ein Flächendesinfektionsmittel vorgeschlagen worden, das eine Kombination von kurzkettigen Alkoholen und Alkansulfonaten oder Alkylsulfaten sowie zusätzlich Alkylethersulfaten zusammen mit einem Säuerungs- oder Alkalisierunsmittel zur Einstellung des pH-Wertes enthält. Nachteilig an diesem vorbekannten Desinfektionsmittel ist trotz seines relativ niedrigen Gehaltes an Alkoholen die Tatsache, daß es zur Erzielung eines Reinigungseffektes aus einer Kombination von Tensiden bestehen und daß zusätzlich der pH-Wert eingestellt werden muß, wobei bekanntermaßen bei Alkalisierung von alkoholhaltigen Desinfektionsmitteln die Wirksamkeit abnimmt. Außerdem hat sich herausgestellt, daß die verwendeten Tenside trotz der relativ niedrigen Dosierung bei häufiger Anwendung zu einem Schichtaufbau auf den behandelten Flächen führen, was besonders in Schwimmbädern, Saunas, Sonnenstudios, aber im auch Restaurant- und Hotelbereich oder Krankenhaus unerwünscht ist, da dieser unästhetische Effekt zumindest von Laien häufig auf mangelnde Sauberkeit zurückgeführt wird.

Es besteht daher noch ein Bedarf nach Flächendesinfektionsmitteln insbesondere für Kunststoffoberflächen, die eine Beschädigung oder auch nur Beeinträchtigung der Oberfläche soweit wie möglich ausschließen.

Zur Lösung der Aufgabe wird ein Flächendesinfektionsmittel, insbesondere für Kunststoffoberflächen auf Basis von kurzkettigen Alkoholen vorgeschlagen, das dadurch gekennzeichnet ist, daß es in wäßriger Lösung enthält 20 bis 30 Gew.-% Ethanol und/oder 1-Propanol und/oder 2-Propanol und 0,001 bis 0,1 Gew.-% einer freien Säure aus der Gruppe der Alkylbenzolsulfonsäuren und/oder Ethercarbonsäuren und/oder Alkanphosphonsäuren.

Überraschenderweise hat sich herausgestellt, daß eine wirksame Desinfektion in kurzer Zeit ohne Schädigung oder Beeinträchtigung des Oberflächenmaterials erreicht werden kann, wenn die verwendeten Desinfektionsmittel einen relativ geringen Gehalt im Bereich zwischen 20 bis 30 Gew.-% kurzkettiger Alkohole, die physiologisch unbedenklich sind, also Ethanol, 1-Propanol oder 2-Propanol aufweisen und wenn als Tensid keine Mischungen verschiedener Verbindungstypen, sondern freie Säuren aus der Gruppe der Alkylbenzolsulfonsäuren, Ethercarbonsäuren oder Alkanphosphonsäuren eingesetzt werden.

Diese Verbindungen werden üblicherweise nicht als Tenside verwendet, sondern nur ihre Salze bei einem pH-Wert über 7. Die Reinigungs- und Benetzungskraft ist im sauren Bereich in wäßriger Lösung im Normalfall nicht ausreichend.

Da es sich bei diesen freien Säuren um relativ starke Säuren handelt, deren pH-Wert einer 1%-igen wäßrigen Lösung im Bereich um 2 liegt, erübrigt es sich, den pH-Wert in der fertigen wäßrigalkoholischen Lösung durch Zugabe anderer Substanzen einzustellen.

Besonders überraschend ist, daß diese saure alkoholische Lösung eine hervorragende Reinigungs- und Benetzungsleistung aufweist.

Im Vergleich zu den vorbekannten Desinfektionsmitteln enthält das erfindungsgemäße Desinfektionsmittel deutlich geringere Tensidmengen, wobei diese Substanzen den Vorzug haben, daß sie nicht zu einem deutlich sichtbaren Schichtaufbau durch Rückstandsbildung auf den Oberflächen führen. Außerdem hat sich gezeigt, daß bei der erfindungsgemäßen Kombination selbst bei häufiger Anwendung und bei erhöhten Temperaturen keine Beeinträchtigung von Kunststoffoberflächen aus Polyestern, Polycarbonaten oder PMMA festzustellen ist. Es tritt weder Rissigkeit noch Verfärbung auf. Festzustellen ist aber nicht nur eine deutliche Verbesserung der Materialverträglichkeit, sondern auch eine Erhöhung der Hautverträglichkeit, einmal bedingt durch den geringen Alkoholgehalt und zum anderen wohl auch basierend auf der Tatsache, daß die enthaltenen Tensidmengen im Vergleich zu den bisher üblichen Konzentrationen sehr gering sind und im pH Bereich liegt, der optimal für die Haut ist.

Als Alkylbenzolsulfonsäuren werden Verbindungen der allgemeinen Formel 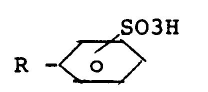 eingesetzt, in der R eine Alkylgruppe mit 8 bis 16 C-Atomen bedeutet. Diese Verbindungen sind als solche bekannt und gelten als toxikologisch wenig belastende und umweltverträgliche Tenside. Vorzugsweise werden Alkylbenzolsulfonsäuren benutzt, die in der Alkylkette überwiegend 11 bis 12 C-Atome aufweisen und die praktisch nur Alkylgruppen mit 10 bis maximal 14 C-Atomen aufweisen.

Ethercarbonsäuren entsprechen der allgemeinen Formel

R - O - (CH₂-CH₂-O)ₙ-CH₂-COOH

, in der R eine Alkylgruppe mit 8 bis 16 C-Atomen und n eine ganze Zahl von 2 bis 16 bedeuten. Vorzugsweise werden Verbindungen eingesetzt, die überwiegend 12 C-Atome in der Alkylgruppe aufweisen und etwa 10 EO-Einheiten enthalten.

Anstelle von Sulfon- oder Carbonsäuren können auch Alkanphosphonsäuren der allgemeinen Formel 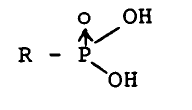 eingesetzt werden, bei denen R ebenfalls eine Alkylgruppe mit 8 bis 16 C-Atomen bedeutet. Zwar ist die Grenzflächenaktivität dieser Phosphonsäuren nicht so ausgeprägt wie bei den anderen Verbindungen, aber dafür verfügen sie über hervorragende lösungsvermittelnde Eigenschaften und können daher insbesondere dann eingesetzt werden, wenn bei der Desinfektion auch salz- oder fetthaltige Verunreinigungen zu entfernen sind.

Für besondere Anwendungszwecke wie beispielsweise der Praxis- oder Küchendesinfektion oder auch in der Nahrungsmittelindustrie können den erfindungsgemäßen Desinfektionsmitteln zusätzlich noch Peroxide zugegeben werden, und zwar in Mengen von 0,001 bis 1,0 Gew.-%. Am häufigsten verwendete Verbindung ist Wasserstoffperoxid, an dessen Stelle auch physiologisch unbedenkliche Derivate wie beispielsweise das Addukt aus Peroxid und Harnstoff eingesetzt werden können. Anstelle von Wasserstoffperoxid können auch geringe Mengen organischer Persäuren wie beispielsweise Peressigsäure oder Perphthalsäure verwendet werden, da diese in saurer wäßriger Lösung Wasserstoffperoxid abspalten. Die materialschonenden Eigenschaften der erfindungsgemäßen Mittel werden durch einen solchen Zusatz nicht beeinträchtigt.

Falls die erfindungsgemäßen Desinfektionsmittel mit metallischen Oberflächen in Berührung kommen können, insbesondere mit nicht veredelten Stählen oder Werkstoffen aus Buntmetallegierungen, sollten die Lösungen geringe Mengen Korrosionsinhibitoren wie beispielsweise die bekannten Verbindungen 1,4-Butindiol oder 1-H-Benzotriazol enthalten. Falls erwünscht, können die Lösungen auch zusätzlich parfümiert sein oder Farbstoffe enthalten, obgleich aus allergologischer Sicht auf solche Zusätze, wenn möglich, verzichtet werden sollte. Falls diese Zusätze erwünscht sind, sollte eine Färbung oder Parfümierung nur mit bekanntermaßen möglichst wenig irretierenden Substanzen vor-genommen werden.

Die mikrobioziden Wirkungen der erfindungsgemäßen Desinfektionsmittel sind trotz des niedrigen Alkoholgehaltes überraschend gut und entsprechen bzw. übertreffen die Erforderungen der Richtlinien für die Prüfung chemischer Desinfektionsmittel der Deutschen Gesellschaft für Hygiene und Mikrobiologie (DGHM). Verschiedene Desinfektionsmittel gemäß Erfindung wurden nach den Richtlinien untersucht; die Ergebnisse belegen die schnelle und außerordentlich gute Wirksamkeit.

Die Erfindung wird im folgenden anhand der Beispiele näher erläutert:

### Beispiel 1

Es wurde ein erfindungsgemäßes Kurzzeitdesinfektionsmittel für alkoholempfindliche Kunststoffoberflächen mit folgender Zusammensetzung hergestellt:
106,40 Gew.-Teile Ethanol, 94,3 %ig, vergällt mit 1 % Methylethylketon
60,00 Gew.-Teile 1-Propanol
90,00 Gew.-Teile 2-Propanol
10,00 Gew.-Teile Alkyl-(C₁₂)-benzolsulfonsäure
0,10 Gew.-Teile Parfüm
733,50 Gew.-Teile Wasser, entsalzt

Die erhaltene Lösung ist farblos und klar, sie läßt sich leicht versprühen und hinterläßt nach dem zwischen keine Schichten oder Schlieren.

In diese Lösung wurden glasklare Acrylglasstücke eingelagert und nach 7 Tagen Einwirkzeit wieder herausgenommen. Die Prüfkörper waren klar und ohne sichtbare Veränderung der Oberfläche.

In einem weiteren Test wurde die Spannungsrißbildung gegenüber Polycarbonat und Polymethylacrylglasermittelt. Der Wert war > 20 MPA.

Um die mikrobiologische Wirksamkeit zu belegen, wurden alle Zubereitungen einem qualitativen Suspensionstest nach den Richtlinien der DGHM unterzogen. Dabei wurden die Keime:
Staphylococcus aureus
Escherichia coli
Pseudomonas aeruginosa
Proteus mirabilis
Candida albicans
Streptococcus faecium
   benutzt. Ergebnisse: Tabelle 2

Außerdem wurde ein quantitativer Suspensionsversuch mit den Keimen:
Staphylococcus aureus
Pseudomonas aeruginosa
Candida albicans
Streptococcus faecium
   durchgeführt. Ergebnisse: Tabelle 3

Ein quantitativer Flächenversuch auf Plexiglas G S 2458 mit den Keimen:
Staphylococcus aureus
Streptococcus faecium
Pseudomonas aeruginosa
Escherichia coli.
Candida albicans
   Ergebnisse: Tabelle 4

Ein quantitativer Flächenversuch auf PVC mit den Keimen:
Staphylococcus aureus
Streptococcus faecium
   Ergebnisse: Tabelle 5
   und ein Keimträgerversuch mit den Keimen:
   Staphylococcus aerus
   Pseudomonas aeruginosa
   Escherichia coli
   Candida albicans
   Streptococcus faecium
   Proteus mirabilis
      Ergebnisse: Tabelle 6

### Beispiele 2 - 10

Weitere Beispiele wurden hergestellt entsprechend den Rezepturen der Tabelle 1
Alle Lösungen waren farblos und klar, sie ließen sich leicht versprühen und hinterließen nach dem Abwischen keine Schichten und Schlieren.
In diese Lösungen wurden, wie in Beispiel 1, glasklar Acrylglasstücke gelagert und nach 7 Tagen Einwirkzeit wieder herausgenommen, die Prüfkörper klar und ohne sichtbare Veränderung der Oberfläche.
Die mikrobiologische Wirksamkeit wurde in einem qualitativen Suspensionstest nach den Richtlinien der DGHM mit den Keimen
Staphylococcus aureus
Escherichia coli
Pseudomonas aeruginosa
Proteus mirabilis
Candida albicans
Streptococcus faecium
   geprüft. Ergebnisse: kein Wachstum (Tabelle 2)

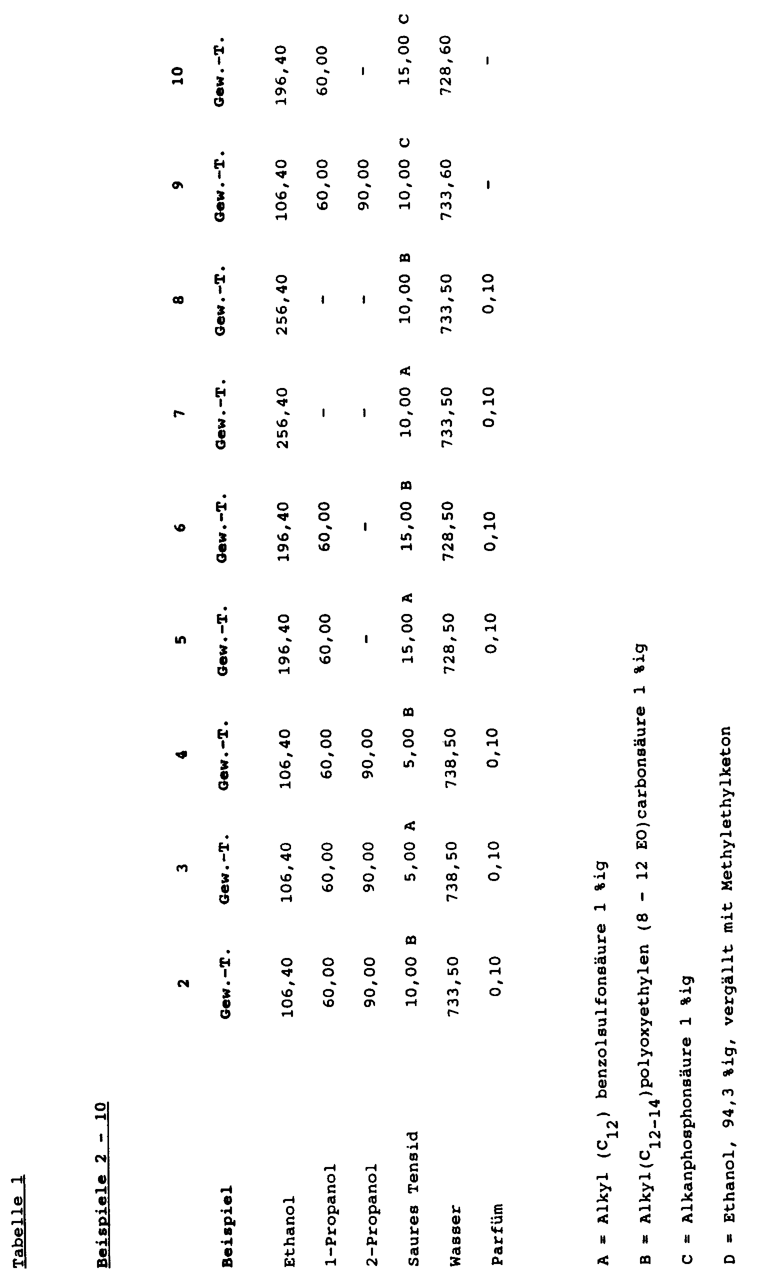

**Tabelle 2**

| **Mikrobiologische Wirksamkeit der genannten Beispiele** **Qualitativer Suspensionsversuch** | | | | | | | | | | | | |
|---|---|---|---|---|---|---|---|---|---|---|---|---|
| **Beispiel:** | | **1** | **2** | **3** | **4** | **5** | **6** | **7** | **8** | **9** | **10** | **K** |
| **KEIM** | **Zeit′ (min)** | | | | | | | | | | | |
| Staph. aureus | 0,5 | - | - | - | - | - | - | - | - | - | - | + |
| | 1,0 | - | - | - | - | - | - | - | - | - | - | + |
| | 2,0 | - | - | - | - | - | - | - | - | - | - | + |
| | 5,0 | - | - | - | - | - | - | - | - | - | - | + |
| E. coli | 0,5 | - | - | - | - | - | - | - | - | - | - | + |
| | 1,0 | - | - | - | - | - | - | - | - | - | - | + |
| | 2,0 | - | - | - | - | - | - | - | - | - | - | + |
| | 5,0 | - | - | - | - | - | - | - | - | - | - | + |
| Ps. aerug. | 0,5 | - | - | - | - | - | - | - | - | - | - | + |
| | 1,0 | - | - | - | - | - | - | - | - | - | - | + |
| | 2,0 | - | - | - | - | - | - | - | - | - | - | + |
| | 5,0 | - | - | - | - | - | - | - | - | - | - | + |
| Prot. mirab. | 0,5 | - | - | - | - | - | - | - | - | - | - | + |
| | 1,0 | - | - | - | - | - | - | - | - | - | - | + |
| | 2,0 | - | - | - | - | - | - | - | - | - | - | + |
| | 5,0 | - | - | - | - | - | - | - | - | - | - | + |
| Cand. albic. | 0,5 | - | - | - | - | - | - | - | - | - | - | + |
| | 1,0 | - | - | - | - | - | - | - | - | - | - | + |
| | 2,0 | - | - | - | - | - | - | - | - | - | - | + |
| | 5,0 | - | - | - | - | - | - | - | - | - | - | + |
| Strept. faecium | 0,5 | - | - | - | - | - | - | - | - | - | - | + |
| | 1,0 | - | - | - | - | - | - | - | - | - | - | + |
| | 2,0 | - | - | - | - | - | - | - | - | - | - | + |
| | 5,0 | - | - | - | - | - | - | - | - | - | - | + |
| Inaktivierung: TLHTH Konzentration: 100 % | | | | | | | | | | | | |

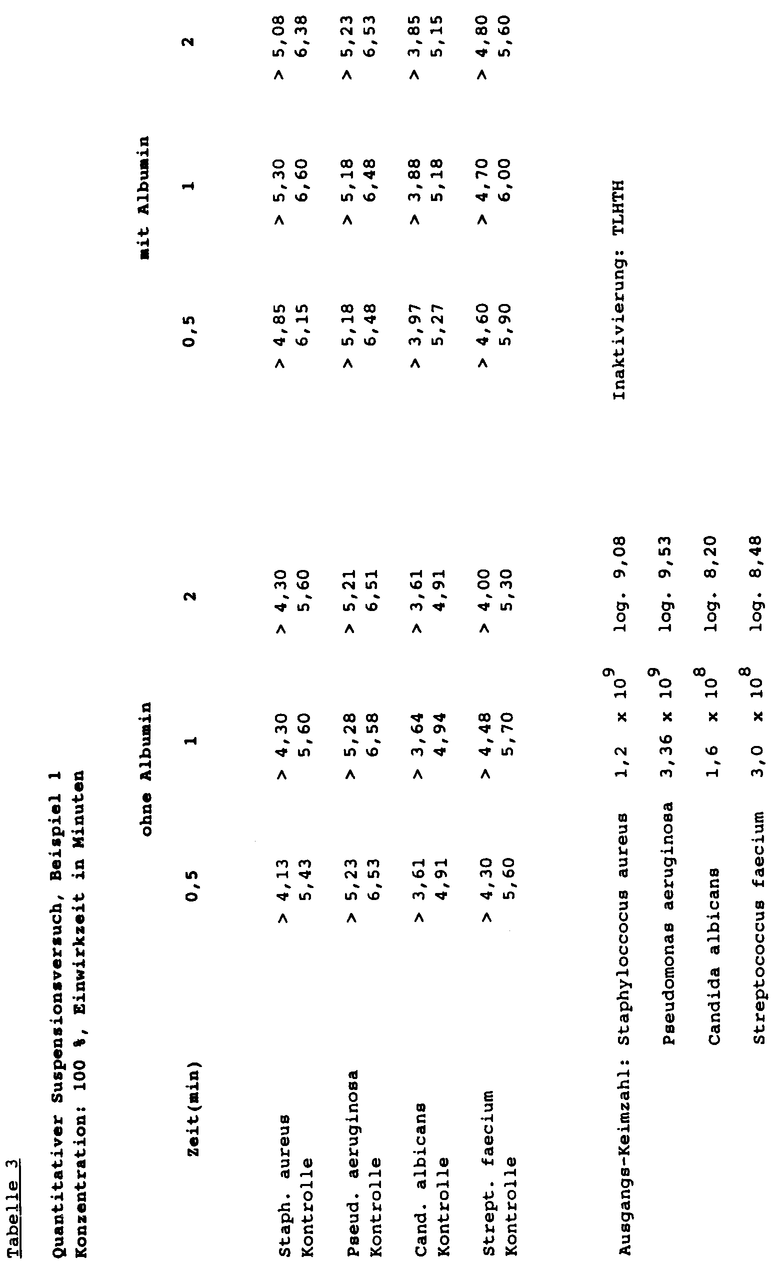

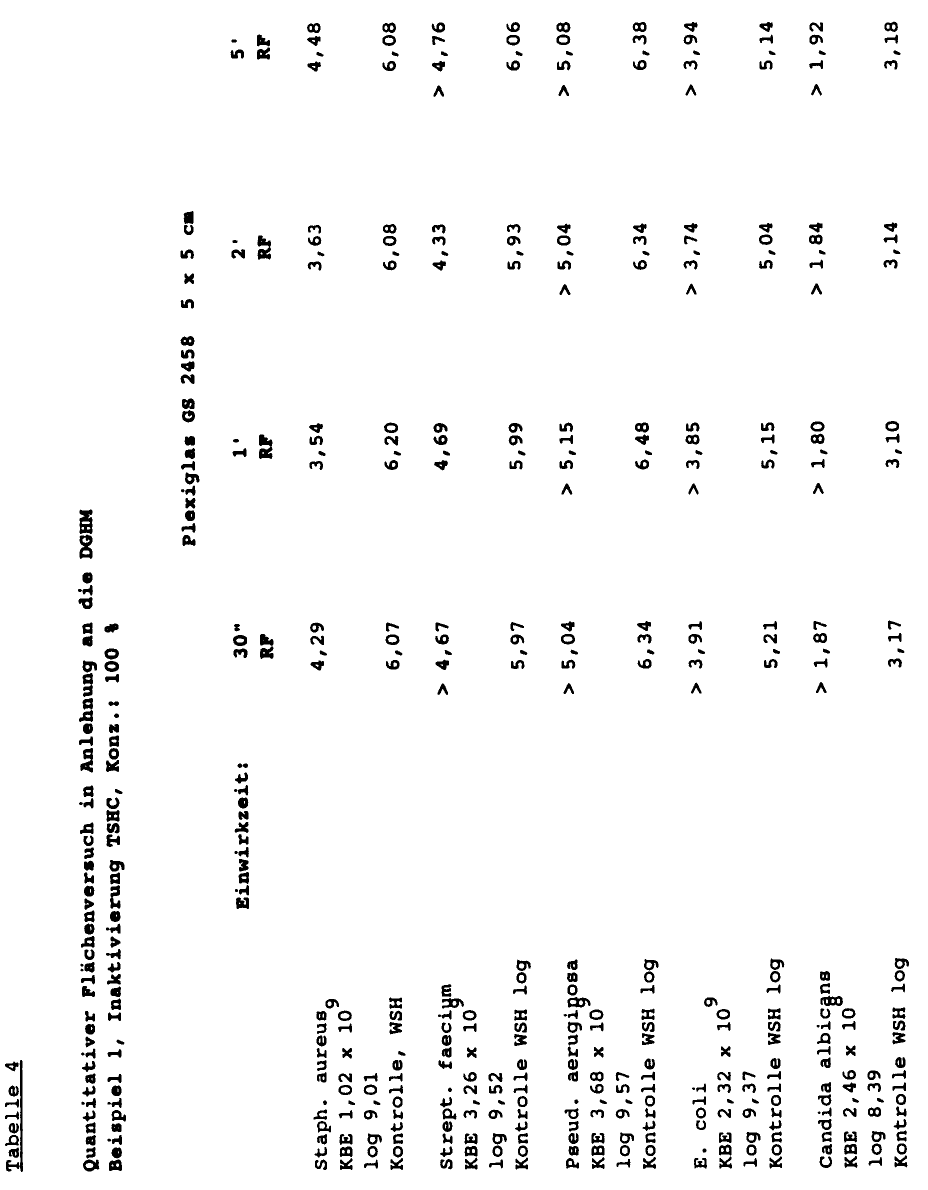

**Tabelle 5**

| **Quantitativer Flächenversuch gemäß DGHM** **Beispiel 1** | | | | |
|---|---|---|---|---|
| | **PVC 5 x 5 cm** | | | |
| | **30" RF** | **1' RF** | **2' RF** | **5' RF** |
| Staph. aureus | 3,22 | 3,07 | 3,48 | 3,64 |
| KBE 1,4 x 10⁹ | | | | |
| log 9,06 | | | | |
| Kontrolle WSH log | 5,60 | 5,63 | 5,56 | 5,54 |
| Strept. faecium | 3,96 | 3,74 | 3,85 | > 4,16 |
| KBE 2,4 x 10⁹ | | | | |
| log 9,3 | | | | |
| Kontrolle WSH log | 5,56 | 5,52 | 5,45 | 5,46 |
| Inaktivierung: TSHC Konzentration: 100 % | | | | |

**Tabelle 6**

| **Keimträgerversuch mit Standard-Baumwolle** **Beispiel 1** | | | | | |
|---|---|---|---|---|---|
| | **Konz. %** | **Einwirkzeit in Minuten** | | | **Ausgangskeimzahl** |
| | | **5′** | **15′** | **30′** | |
| Staphylococcus aureus | 100 | + | - | - | 3,2 x 10⁸ |
| | Kontrolle | + | + | + | |
| Pseudomonas aeruginosa | 100 | - | - | - | 3,3 x 10⁹ |
| | Kontrolle | + | + | + | |
| Escherichia coli | 100 | + | - | - | 9,2 x 10⁸ |
| | Kontrolle | + | + | + | |
| Candida albicans | 100 | + | - | - | 3,4 x 10⁸ |
| | Kontrolle | + | + | + | |
| Streptococcus faecium | 100 | + | - | - | 1,8 x 10⁸ |
| | Kontrolle | + | + | + | |
| Proteus mirabilis | 100 | - | - | - | 3,5 x 10⁹ |
| | Kontrolle | + | + | + | |
| Inaktivierung: TLHTH | | | | | |

## Patentansprüche

1. Flächendesinfektionsmittel, insbesondere für Kunststoffoberflächen auf Basis kurzkettiger Alkohole, dadurch gekennzeichnet, daß es in wäßriger Lösung enthält 20 bis 30 Gew.-% Ethanol und/oder 1-Propanol und/oder 2-Propanol und 0,001 bis 0,1 Gew.-% einer freien Säure aus der Gruppe der Alkylbenzolsulfonsäuren der allgemeinen Formel 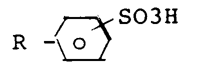 und/oder Ethercarbonsäuren der allgemeinen Formel
R - O - (CH₂-CH_{c}-O)ₙ-CH₂-COOH
und/oder Alkanphosphonsäuren der allgemeinen Formel 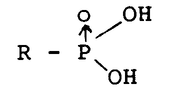 , wobei n eine ganze Zahl von 10 bis 16 und R eine Alkylgruppe mit 8 bis 16 C-Atomen bedeuten.

2. Flächendesinfektionsmittel nach Anspruch 1, dadurch gekennzeichnet, daß es 0,001 bis 1,0 Gew.-% Wasserstoffperoxid oder eines physiologisch unbedenklichen Wasserstoffperoxid-Derivates oder einer organischen Persäure enthält.

3. Flächendesinfektionsmittel nach Anspruch 1 oder 2, dadurch gekennzeichnet, daß es Alkylbenzolsulfonsäuren mit überwiegend 11 bis 12 C-Atomen in der Alkylgruppe enthält.

4. Flächendesinfektionsmittel nach Anspruch 1 bis 2, dadurch gekennzeichnet, daß es Ethercarbonsäure mit überwiegend 12 C-Atomen in der Alkylgruppe und etwa 10 EO-Einheiten enthält.

5. Flächendesinfektionsmittel nach Anspruch 1 bis 2, dadurch gekennzeichnet, daß es Alkanphosphonsäuren mit überwiegend 12 bis 14 C-Atomen in der Alkylgruppe enthält.

6. Flächendesinfektionsmittel nach Anspruch 1 bis 5, dadurch gekennzeichnet, daß es das Addukt aus Wasserstoffperoxid und Harnstoff enthält.

7. Flächendesinfektionsmittel nach Anspruch 1 bis 5, dadurch gekennzeichnet, daß es 0,01 bis 0,1 Gew.-% Peressigsäure oder Perphthalsäure enthält.

8. Flächendesinfektionsmittel nach Anspruch 1 bis 7, dadurch gekennzeichnet, daß es geringe Mengen 1,4-Butindiol oder 1-H-Benzotriazol enthält.

## Claims

1. A surface disinfectant, in particular for plastic surfaces, based on short-chain alcohols characterized in that it comprises in an aqueous solution 20 to 30 % w/v of ethanol and/or 1 -propanol and/or 2-propanol and 0.001 to 0.1 % w/v of a free acid out of a group of alkylbenzenesulphonic acids of the general formula 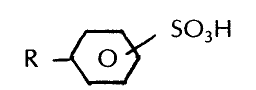 and/or ethercarbonic acids of the general formula
R - O - (CH₂ - CH_{c} - O)ₙ - CH₂ - COOH
and/or alkanephosphonic acids of the general formula 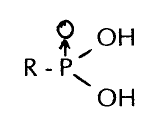 , wherein n is a whole number between 10 and 16 and R is an alkyl group with 8 to 16 carbon atoms.

2. A surface disinfectant according to claim 1, characterized in that it comprises 0.001 to 1.0 % w/v of hydrogen peroxide or a physiologically harmless derivative of hydrogen peroxide or an organic peracid.

3. A surface disinfectant according to claim 1 or 2, characterized in that it comprises alkylbenzenesulphonic acids with predominantly 11 to 12 carbon atoms in the alkyl group.

4. A surface disinfectant according to claim 1 or 2, characterized in that it comprises ethercarbonic acid with predominantly 12 carbon atoms in the alkyl group and aprox. 10 ethylene oxide groups.

5. A surface disinfectant according to claim 1 or 2, characterized in that it comprises alkanephosphanic acids with predominantly 12 to 14 carbon atoms in the alkyl group.

6. A surface disinfectant according to any one of the preceeding claims 1 to 5, characterized in that it comprises the adduct of hydrogen peroxide and urea.

7. A surface disinfectant according to any one of the preceeding claims 1 to 5, characterized in that it comprises 0.01 % w/v to 0.1 % w/v of peracetic acid or perphthalic acid.

8. A surface disinfectant according to any one of the preceeding claims 1 to 7, characterized in that it comprises a small amount of 1,4-butynediol or 1-H-benzotriazole.

## Revendications

1. Désinfectant de surfaces en particulier pour les surfaces plastiques à base d' alcools de chaîne courte caractérisé en ce qu'il comprend en solution aqueause entre 20 et 30 pour cent en poids d' éthanol et/ou 1-propanol et/ou 2-propanol et 0.001 à 0.1 pour cent en poids d'un acide du groupe des acides alkylbenzènesulfoniques de la formule générale 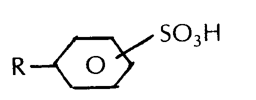 et/ou des acides éther carboniques de la formule générale
R - O - (CH₂ - CH_{c} - O)ₙ - CH₂ - COOH
et/ou des acides alcane phosphoniques de la formule générale 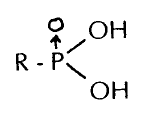 , où n est un nombre entier entre 10 et 16 et R est un groupe alkyle avec 8 à 16 atomes de carbone.

2. Désinfectant de surfaces selon la revendication 1, caractérisé en ce qu'il comprend de 0.001 à 1.0 pour cent en poids de peroxyde d'hydrogène ou d'un dérivé du peroxyde d'hydrogène physiologiquement non douteuse ou d'un peracide organique.

3. Désinfectant de surfaces selon la revendication 1 ou 2, caractérisé en ce qu'il comprend des acides alkylbenzènesulfoniques avec un groupe alkyle contenant prépondéramment 11 à 12 atomes de carbone.

4. Désinfectant de surfaces selon la revendication 1 ou 2, caractérisé en ce qu'il comprend acide éther carbonique avec un groupe alkyle contenant prépondéramment12 atomes de carbone et aprox. 10 unités d'oxyde éthylène.

5. Désinfectant de surfaces selon la revendication 1 ou 2, caractérisé en ce qu'il comprend des acides alcane phosphoniques avec un groupe alkyle contenant prépondéramment 12 atomes de carbone.

6. Désinfectant de surfaces selon une des revendications 1 à 5, caractérisé en ce qu'il comprend l'adduct de peroxyde d'hydrogène et d'urée.

7. Désinfectant de surface selon une des revendications 1 à 5, caractérisé en ce qu'il comprend 0.01 à 0.1 pour cent en poids du peracide acétique ou de peracide phthalique.

8. Désinfectant de surfaces selon une des revendications 1 à 7, caractérisé en ce qu'il comprend une petite quantité de 1,4-butinediol ou 1-H-benzotriazole.
